# EUROPÄISCHE PATENTANMELDUNG

(11) **EP 1 229 708 A2**
(43) Veröffentlichungstag der Anmeldung: **07.08.2002**
(21) Anmeldenummer: 02001629.1
(22) Anmeldetag: 24.01.2002
(51) Int. Cl.: H04M 7/00, H04M 3/38

(54) **Verfahren zur flexiblen Registrierung von Benutzern an verschiedenen IP-Telefon-Apparaten in einem IP-Telekommunikations-System**

(30) Priorität: 05.02.2001 DE 10105052
(71) Anmelder: Tenovis GmbH & Co. KG, 60326 Frankfurt am Main (DE)
(72) Erfinder: Hatlak, Walter, 60488 Frankfurt a.Main (DE); Rossmann, Günter, 64546 Mörfelden-Walldorf (DE); Wiese, Garrelt, 64297 Darmstadt (DE); Niebuhr, Axel, 65719 Hofheim-Lorsbach (DE)
(74) Vertreter: Patentanwaltskanzlei WILHELM & BECK

(57) **Zusammenfassung**

Bekannt ist ein Verfahren zur flexiblen Registrierung von Benutzern an verschiedenen IP-Telefon-Apparaten in einem IP-Telekommunikations-System. Um die Registrierung zu flexibilisieren, ist vorgesehen, dass beim Anmelden eines Benutzers an einem beliebigen Apparat des Systems einem Gatekeeper eine IP-Adresse und ein benutzerspezifisches Codewort mitgeteilt werden, und dass der Benutzer nach einer Überprüfung dieser Daten mit der gelieferten IP-Adresse registriert wird.

## Beschreibung

Verfahren zur flexiblen Registrierung von Benutzern an verschiedenen IP-Telefon-Apparaten in einem IP-Telekommunikations-System

Die vorliegende Erfindung betrifft ein Verfahren zur flexiblen Registrierung von Benutzern an verschiedenen IP-Telefon-Apparaten in einem IP-Telekommunikations-System.

Bekannt sind ISDN-Telekommunikationsanlagen (ISDN-TK-Anlage), bei denen ein "flexibles Telefonieren" möglich ist. Dabei kann ein fremdes Telefon innerhalb der ISDN-TK-Anlage wie das eigene benutzt werden, um z.B. ein eigenes Telefonverzeichnis benutzen zu können oder den Briefkasten abzufragen. Zum "flexiblen Telefonieren" ist am fremden Telefon im Service-Menü die interne PIN bzw. Code-Nummer einzugeben. Falls man in einem Netzverbund eine netzweit gültige PIN erhalten hat, ist zusätzlich die gesamte eigene Rufnummer einzugeben und die Eingabe entsprechend zu quittieren. Das fremde Telefon verhält sich dann wie das eigene Telefon. Über das Service-Menü kann die Identifizierung am fremden Telefon jederzeit wieder ausgeschaltet werden. Je nach Festlegung im System kann die Identifizierung auch automatisch ausgeschaltet werden, wenn das Telefon z.B. 3 Minuten lang nicht benutzt wird.

Weiterhin sind aus der WO 99/35811 ein Festnetz-Telefon oder Mobiltelefon bekannt, die über ein öffentliches Telefonnetz (PSTN) durch einen Internet-Nummern-Router/Gateway Zugang zum Internet haben. Dabei übersetzt bzw. wandelt das Gateway die Telefonnummer in eine Internetprotokoll-Adresse (IP-Adresse) und umgekehrt.

Bekannt ist weiterhin, bei IP-Telekommunikations-Systemen die IP-Telefone über einen PC mit einem Internet-browser anzusprechen und auf entsprechenden IP-Telefon-Seiten zu verwalten.

Aufgabe der vorliegenden Erfindung ist es, die Flexibilität der Registrierung von Benutzern an verschiedenen IP-Telefon-Apparaten in einem IP-Telekommunikations-System zu erhöhen.

Erfindungsgemäß ist dies bei einem Verfahren mit den Merkmalen des Patentanspruches 1 erreicht. Mit dem erfindungsgemäßen Merkmal "User Mobility" wird dem Benutzer die Möglichkeit gegeben, sich auf einfache Weise an verschiedenen IP-Telefon-Apparaten anzumelden. Es erfolgt also in der IP-PBX bzw. dem Gatekeeper eine Trennung zwischen Apparat und Benutzer. Das Leistungsmerkmal "User Mobility" bietet als Vorteile für den Benutzer insbesondere, dass der Benutzer sich an verschiedenen IP-Apparaten innerhalb des IP-Systems auf einfache Weise anmelden kann und dann jeweils seine vollständige Telefon-Umgebung zur Verfügung hat, z.B. in Besprechungsräumen oder nach einem Umzug. Zudem kann ein defekter Apparat problemlos ausgetauscht werden, ohne dass die Benutzerdaten bzw. das Benutzerprofil verloren gehen, wenn der Gatekeeper mit einer geeigneten Datenbank verbunden ist. Die Zuordnung des Benutzers zum gewählten Apparat muss nicht aufwendig administriert werden, da sie dynamisch erfolgt, Benutzer und Apparat also voneinander getrennt sind. Erweiterungen der TK-Anlage sind damit besonders einfach möglich.

In weiteren abhängigen Ansprüchen finden sich weitere vorteilhafte Ausgestaltungen des erfindungsgemäßen Verfahrens.

Nachfolgend sind ein Ausführungsbeispiel des erfindungsgemäßen Verfahrens und ein entsprechendes IP-TK-System beschrieben; es zeigen:
- Fig. 1: ein Blockschaltbild des IP-TK-Systems mit der Funktion "User Mobility",
- Fig. 2: das Blockschaltbild gemäß Fig. 1 bei der Zusatzfunktion "CFNLI", sowie
- Fig. 3: das Blockschaltbild gemäß Fig. 1 unter Verwendung eines Administrationsservers.

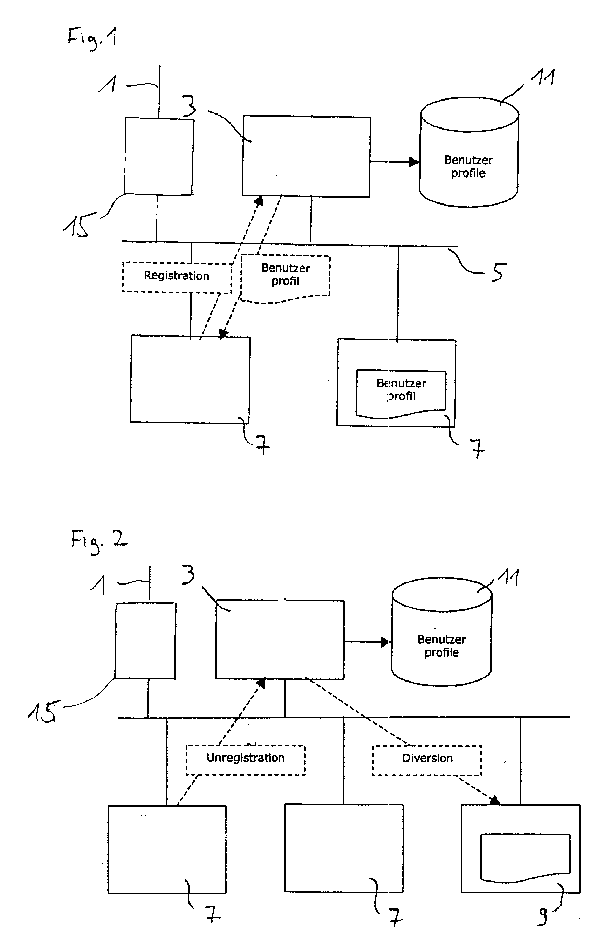

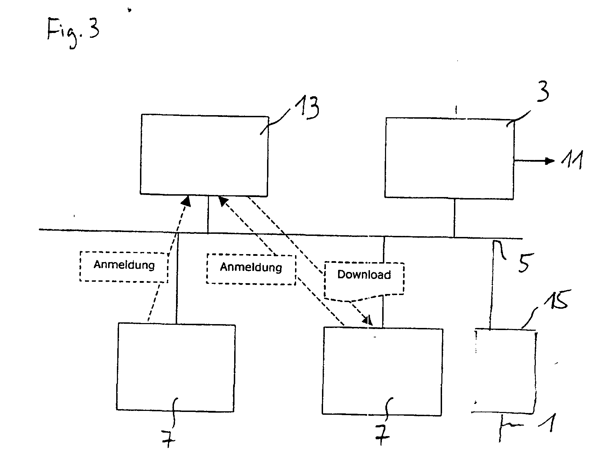

Bei einer Internet-Protokoll-Telekommunikationsanlage (IP-TK-Anlage) bzw. IP-TK-System gemäß Fig. 1, 2, 3 ist eine Internetleitung 1 über einen Router 15 mit einem lokalen Netz (LAN) 5 beispielsweise einem Intranet verbunden. Anstelle eines Routers 15 kann auch ein Firewall zur Internetanbindung des lokalen Netzes eingesetzt werden. An dem LAN 5 hängen im Unterschied zu einem ISDN-Netz ohne feste Zuordnung mehrere Internet-Protokoll (IP)-Telefone 7, d.h. Telefone mit IP-Schnittstelle. An das LAN 5 ist weiterhin ein Gatekeeper 3 angeschlossen, der als zentrales Steuerelement für das Routen der Rufsignalisierung, die Auflösung der Telefonnummer und der IP-Adressen bzw. deren Umwandlung zuständig ist. Das IP-Telefon 7 bietet dabei an dem Gatekeeper 3 bzw. der IP-PBX den Leistungsumfang an, den ein bekanntes ISDN-Telefon an einer herkömmlichen ISDN-PBX bietet, und weist dazu auch einen nichtflüchtigen Speicher auf. Der Gatekeeper 3 ist bei der Kommunikation im Unterschied zu einem ISDN-Gateway lediglich am Verbindungsaufbau beteiligt und weist kein Koppelfeld auf. Die Sprachsignale werden also direkt ohne Sprachdatenanpassung zwischen den einerseits am Internet 1 und andererseits am LAN 5 hängenden Clients ausgetauscht. Weiterhin hängt am Netz 5 ein beispielsweise als in einem PC realisierter Sprachspeicher als UMS (unified messaging system) 9. Der Gatekeeper 3 ist mit einer Datenbank 11 zur Speicherung von Benutzerprofilen verbunden. Zudem ist dem LAN 5 ein Administrations-Server 13 zugeordnet (ausschließlich in Fig. 3 gezeigt).

Mit dem Merkmal "User Mobility" wird dem Benutzer die Möglichkeit gegeben, sich an verschiedenen IP-Telefon-Apparaten 7 innerhalb der TK-Anlage anzumelden. Es erfolgt im Gatekeeper 3 eine Trennung zwischen dem Apparat und dem Benutzer. Ein an sich bekanntes H.323-Protokoll unterstützt das Merkmal User Mobility durch den "Registration Mechanismus". Zur Sicherung der Anmeldung wird das H. 235-Protokoll als Bestandteil des H.323-Protokolls benutzt. Über die Registration wird die Verbindung in dem LAN (local area network) 5 des Systems zwischen dem Telefon-Apparat 7 oder einer Telefon-Applikation beispielsweise einem PC zum Telefonieren und dem Gatekeeper 3 als zentraler Vermittlungsfunktion hergestellt. Dem Gatekeeper 3 wird dabei die IP-Adresse des jeweiligen Apparates 7 bekannt gemacht. Da die IP-Adresse in vielen LAN-Installationen dynamisch über den "DHCP-Mechanismus" vergeben wird, muss diese Information nicht statisch im Gatekeeper 3 aufwendig konfiguriert werden.

Das Merkmal "User Mobility" stellt weiterhin eine Anmelde-(Login-) und eine Abmelde- (Logoff-) Prozedur des Benutzers am Telefon-Apparat 7 zur Verfügung. Bei der Anmeldung (Login) gibt der Benutzer seine Identifikation, z.B. seine Telefonnummer oder den Benutzernamen und ein persönliches Passwort ein. Je nach Komfort des IP-Telefons 7 wird dabei auch eine alpha-numerische Eingabe unterstützt. Das Merkmal "User Mobility" ordnet dem Benutzer mit dem Login die IP-Adresse zu.

Der Gatekeeper 3 erhält dann die die Benutzer-Identifikationsinformation ergänzt um die IP-Adresse des gerade benutzten Apparates in der Registration-Meldung und prüft, ob der Benutzer und das Passwort übereinstimmen. Ist dies der Fall, wird der Benutzer mit der gerade gelieferten IP-Adresse im IP-TK-System registriert. Bei der Abmeldung (Logoff) wird die registrierte Zuordnung des Benutzers zur IP-Adresse wieder gelöscht. Der Benutzer kann sich an einem anderen IP-Telefon des Systems oder am selben erneut anmelden (Fig. 1).

Zusätzlich zum einfachen An- und Abmelden an einem IP-Telefon 7 bietet das Merkmal "User Mobilty" noch die Möglichkeit des "Remote Login" und "Remote Logoff". Bei diesen beiden Leistungsmerkmalen ist der Benutzer jeweils an einem ersten IP-Telefon-Apparat angemeldet, befindet sich jedoch zur Zeit an einem anderen zweiten IP-Telefon-Apparat der gleichen H.323-Zone. Beim Remote-Login meldet sich der bereits an dem ersten Apparat angemeldete und noch nicht abgemeldete Benutzer zusätzlich an dem zweiten Apparat an und wird daraufhin vom Gatekeeper automatisch am ersten Apparat abgemeldet bzw. die Zuordnung des Benutzers zum ersten Apparat gelöscht. Beim Remote-Logoff wird der Benutzer über einen entsprechenden im zweiten Apparat eingegebenen Funktionsaufruf beim ersten Apparat abgemeldet, ohne dass sich der Benutzer am zweiten Apparat anmelden muss (nicht gezeigt).

Im flüchtigen Speicher des IP-Telefons 7 werden auch Benutzer-spezifische Daten gespeichert, z.B. lokale Einstellungen des Apparates wie Sprache oder ein lokales Telefonbuch. Diese Benutzer-spezifischen Daten werden als Benutzerprofil bezeichnet. Beim Abmelden eines Benutzers durch den Gatekeeper 3 am IP-System wird das im Apparat gespeicherte Benutzerprofil in der Datenbank 11 gesichert und beim erneuten Anmelden des betreffenden Benutzers wieder in den von ihm nun gewählten Apparat neu geladen. Dabei ist in Fig. 1 zum einen ein IP-Telefon beim Registrierungsvorgang und zum anderen ein bereits angemeldetes IP-Telefon mit dem entsprechenden aus der Datenbank 11 geladenen Benutzerprofil gezeigt.

Nachfolgend ist eine Erweiterung des oben dargestellten Leistungsmerkmals "User Mobility" anhand von Fig. 2 beschrieben. "User Mobility" gibt dem Benutzer der IP-TK-Anlage, wie oben beschrieben, die Möglichkeit, sich an einem IP-Telefon 7 an-bzw. abzumelden. Meldet sich ein Benutzer z.B. abends oder am Wochenende ab, ist der Benutzer zwar gegen Missbrauch seines Apparates bzw. seines Benutzer-Kontos geschützt. Der Benutzer ist jedoch auch nicht erreichbar, z.B. ist die Anrufliste nicht aktiv. Das Merkmal "Call Forwarding on Not Logged In" bzw. "CFNLI" richtet automatisch beim Abmelden (Unregistration) des Benutzers eine Rufumleitung auf ein vorher, beispielsweise bei der Inbetriebnahme des IP-Apparates 7 am IP-System, eingerichtetes Anrufziel ein (Diversion). Dies kann entweder ein beliebiger weiterer Benutzer oder ein Sprachspeicher bzw. das zusätzlich in Fig. 2 gezeigte UMS (unified messaging system) 9 sein (Fig. 2). Das UMS 9 kann beispielsweise durch eine Anrufbeantworterfunktion realisiert sein, die den eingehenden Anruf aufzeichnet und an eine mail box weiterleitet. Die Rufumleitung kann innerhalb der betreffenden H.323-Zone oder auch außerhalb erfolgen und wird gemäß der vom Benutzer vorgegebenen Daten durch den Gatekeeper 3 eingerichtet.

Beim erneuten Anmelden wird die Rufumleitung bzw. die gespeicherte IP-Adresse gemäß CFNLI wieder automatisch vom Gatekeeper 3 gelöscht. Das Merkmal CFNLI wird also vom angemeldeten Benutzer einmalig eingerichtet und das angegebene Rufumleitungsziel wird im Gatekeeper gespeichert und entsprechend jeweils aktiviert. Hat der Benutzer beim Abmelden jedoch eine "normale" Rufumleitung aktiviert, wird das Merkmal CFNLI nicht aktiv, d.h. die eingerichtete "normale" Rufumleitung bleibt bestehen. Beim Anmelden des Benutzers nach einer Abmeldung mit "normaler" Rufumleitung bleibt diese im Unterschied zu CFNLI unverändert bestehen. Das Merkmal "Call Forwarding on Not Logged In" bietet als Vorteile für den Benutzer, dass Anrufe an den Benutzer immer zugestellt werden können, auch wenn es der Benutzer beim Abmelden vergessen hat, eine "normale" Rufumleitung zu aktivieren. Das Einrichten der Rufumleitung gemäß CFNLI erfolgt nämlich automatisch (Fig. 2).

In Fig. 3 ist der zentrale Administrations-Server 13 als zusätzliche Komponente des IP-TK-Systems dargestellt. Der Server 13 realisiert die Verwaltung der IP-Telefon-Apparate 7 und der weiteren mit dem LAN 5 verbundenen clients. Beim IP-Telefon 7 sind der Benutzer und der Apparat getrennt, d.h. der Benutzer meldet sich dynamisch bei dem gewünschten Apparat an. Der IP-Telefon-Administrations-Server ist also nicht mit der Verwaltung der Anmeldung der IP-Telefon-Apparate beschäftigt, sondern ausschließlich für die Verwaltung der angemeldeten Apparate.

Beim erstmaligen Einschalten des IP-Telefons im IP-TK-System meldet sich der Apparat mit seiner IP-Adresse beim Administrations-Server 13 an. Die IP-Adresse wird entweder durch einen DHCP-Service dynamisch vergeben, wie oben beschrieben, oder fest im Apparat in an sich bekannter Weise eingestellt. Der Apparat 7 ist damit dem Administrations-Server 13 erstmals bekannt. Ein apparatespezifisches bzw. eindeutiges Identifikationsmerkmal eines Apparates ist beispielsweise dessen Seriennummer, die ebenfalls bei der Anmeldung geliefert wird. Beim Anmelden eines IP-Apparates prüft der Administrations-Server 13 zunächst die Software-Version des Apparates und die Apparate-spezifischen Daten und initiiert gegebenenfalls das Laden der passenden Software-Version und die korrekte Einstellung der Parameter, wie in Fig. gezeigt (Download). Im laufenden Betrieb kann der IP-Administrations-Server die folgenden Dienste für die IP-Telefone 7 bereitstellen:
- Automatischer Austausch der Apparate-Software bei releases,
- Administration von Apparate-spezifischen Daten, wie z.B.
- Rufton oder Besetztton,
- Einstellen der Gatekeeper-Adresse,
- Registrieren von Apparate-Fehlern und gegebenenfalls Senden einer Fehlermeldung zum Service-Zentrum, Auslesen von Fehlerspeichern im Apparat, Überwachen der Apparate,
- Sperren oder Freigeben eines Apparates,
- Auslesen von Qualitätsdaten aus dem Apparat, wie z.B. Fehlerzähler für verlorene IP-Pakete, sowie
- Erheben von Statistik-Information.

Der Administrations-Server 13 bietet also dem TK-System-Kundendienst und/oder dem Benutzer eine einfache Schnittstelle, die lokal im LAN 5 oder auch aus einem Service-Zentrum aufgerufen werden kann. Der Administrations-Server 13 bietet insbesondere als Vorteile für den Benutzer die zentrale Administration aller zum Telefon-System gehörenden IP-Apparate 7, 9, die automatische Erkennung von Apparate-Fehlern sowie die Alarmierung des Benutzers oder des Service-Zentrums (Fig. 3). Ein aufwendiges Verwalten der IP-Telefone über einen Internet-browser kann entfallen. Die IP-Telefone müssen nun nicht mehr einzeln über lokale Adressen bzw. deren jeweilige Intranet-Seiten angesprochen werden, sondern können alle parallel über den Administrations-Server 13 angesprochen werden.

### Bezugszeichenliste

- 1: Internet
- 3: Gatekeeper
- 5: LAN
- 7: IP-Telefon
- 9: UMS
- 11: Datenbank
- 13: Administrations-Server
- 15: Router

## Patentansprüche

1. Verfahren zur flexiblen Registrierung von Benutzern anverschiedenen IP-Telefon-Apparaten in einer IP-Telekommunikations-System,
**dadurch gekennzeichnet,**
**dass** beim Anmelden eines Benutzers an einem beliebigen Apparat des Systems einem Gatekeeper (3) eine IP-Adresse und ein benutzerspezifisches Codewort mitgeteilt werden, und dass der Benutzer nach einer Überprüfung dieser Daten mit der gelieferten IP-Adresse registriert wird.

2. Verfahren nach Anspruch 1, **dadurch gekennzeichnet, dass** beim Anmelden eines bereits an einem ersten Apparat angemeldeten Benutzers an einem zweiten Apparat der Benutzer automatisch an dem ersten Apparat abgemeldet wird.

3. Verfahren nach Anspruch 1 oder 2, **dadurch gekennzeichnet, dass** ein an einem ersten Apparat angemeldeter Benutzer ohne Anmeldung über einen Funktionsaufruf beim zweiten Apparat an dem ersten Apparat abgemeldet wird.

4. Verfahren nach einem der vorhergehenden Ansprüche, **dadurch gekennzeichnet, dass** ein Benutzerprofil beim Abmelden in einer Datenbank (11) gespeichert wird.

5. Verfahren nach einem der vorhergehenden Ansprüche, **dadurch gekennzeichnet, dass** beim Abmelden des Benutzers automatisch eine Rufumleitung auf ein am System eingerichtetes Anrufziel aktiviert wird.

6. Verfahren nach einem der vorhergehenden Ansprüche, **dadurch gekennzeichnet, dass** beim erstmaligen Einschalten eines Apparates dieser mit seiner IP-Adresse und einem apparatespezifischen Identifikationsmerkmal bei einem Administrations-Server (13) angemeldet wird.

7. Verfahren nach einem der vorhergehenden Ansprüche, **dadurch gekennzeichnet, dass** beim Anmelden eines Apparates dessen Apparate-Software auf Aktualität überprüft wird, und im Fall einer veralteten Software eine neue Software auf den Apparat geladen wird.
